Europäisches Patentamt

European Patent Office

Office européen des brevets

(11) Publication number: 0 541 237 A1

# EUROPEAN PATENT APPLICATION

(21) Application number: 92308859.5

(51) Int. Cl.5: G06F 3/033, G06F 15/20

(22) Date of filing: 29.09.92

(30) Priority: 08.11.91 US 789284
18.12.91 US 809944

(43) Date of publication of application:
12.05.93 Bulletin 93/19

(84) Designated Contracting States:
DE FR GB

(71) Applicant: INTERNATIONAL BUSINESS
MACHINES CORPORATION

Armonk, NY 10504(US)

(72) Inventor: Glaser, Howard J.
395 Avenide Manzanos
San Jose, California 95123(US)
Inventor: Darnell, Michael J.
240 Rio Del Mar Blvd., No.M
Aptos, California 95003(US)

(74) Representative: Blakemore, Frederick Norman
IBM United Kingdom Limited Intellectual
Property Department Hursley Park
Winchester Hampshire SO21 2JN (GB)

(54) Data entry field modification in a graphical user interface.

(57) A computer system has a graphical user interface 100 for the entry of text data in a data store or the display of data therefrom. The interface provides a document form display including at least one data entry field 141 for text entry/display. The system includes a mouse 60 for positioning a cursor on the display under the control of a user, and for accepting user input. The system is responsive to a selected positioning of the cursor and to a further control input from the user for varying the size of the data field.

FIG. 4

The present invention relates to a data processing system including a video display terminal, mouse means for positioning a cursor on the video display terminal and providing control inputs to the system, and graphical user interface means for representing a document on the video display terminal.

The use of graphical user interface technology to operate data processing equipment is known in the art. Commercially available graphical user interface systems include "WINDOWS", by Microsoft Corporation, and "PRESENTATION MANAGER", by International Business Machines Corporation. By the expression "graphical user interface" is meant a data input/output interface providing a graphical display, including text and associated graphics information, as opposed to a text-only display. Such systems are ideally suited and conventionally adapted for menu-driven operation. That is, they allow a user to control computer operations by selecting commands from one or more menus exhibited on a display without entering statements in alphanumeric form via a keyboard. Selections are made using a mouse or other control device that moves a pointer to an icon image in the display. An icon is a visual symbol in a graphics display which signifies information, function, or a menu entry. An icon is "selected" by moving a mouse-controlled pointer or cursor to it and pressing a button on the mouse. In the art, this is referred to as "point-and-click".

In the prior art graphical user interfaces, data entry into an application is supported by document display representations with data entry fields. In this regard, where data entry into a data store is desired, data entry fields are used to enter such information and provide various views of that store. However, in existing graphical user interfaces, the fields have a size which is fixed and can be changed only by modification of the underlying code. Inherently, the fixed size of a data entry field limits the amount of data which can be placed in the field and entered in the data store.

Accordingly, the invention provides a data processing system including a video display terminal, mouse means for positioning a cursor on the video display terminal and providing control inputs to said system, and graphical user interface means for representing a document on the video display terminal, said document having at least one data field for text entry or display,

the data processing system being characterised by:

means for generating a symbol on said document representation associated with a data field therein;

re-sizing means responsive to the cursor being positioned at said symbol and to a re-sizing control input from said mouse means for changing the size of the associated data field.

The data processing system employs a menu-driven graphical user interface for the entry of text data in a data store. The system is adapted to receive user inputs for controlling the graphical user interface, which interface provides a document form display including at least one data field for text entry. The system is further adapted to generate a mouse-controlled pointer in the display which is positionable in response to a first control input from a user. The system is responsive to a second control input from a user for conducting a resizing operation to vary the size of the data field. By providing a dynamically expandable data field in an otherwise structured form document, the system permits the customization of data input and output by enabling the user to exercise complete control over the size of the data field.

Such a graphical user interface control system allows a user, by its activation, to create and modify highly structured form documents with one or more expandable data entry fields. Where data entry into a data store is desired, structured text forms with expandable data entry fields can be used to enter a variable amount of information into the data store. Such text forms appear as a document and represent a collection of data entry fields with labels in the main work area of the window (user area). Expansion of an existing entry field would be required where the application permits the user to add text descriptions associated with specific facts in the data store. The system therefore provides a data entry form possessing the characteristics of both dialogue boxes and text files in that users have entry fields to specify requested data, but are able to tailor the form by dynamically expanding one or more data entry fields where permitted by the application. This control capability is provided in a visually apparent manner, indicating to the user that data fields can be expanded and suggesting the manner in which that expansion can be implemented.

The cursor represents a form of pointer, whereby the user can select a position on the screen. The symbol indicates a predetermined location (termed a "grabpoint") that is associated with a data field in the document being displayed. In a preferred embodiment, said symbol is a rectangle in one corner of the data entry field associated therewith. The data field can be used for displaying text data to be input in a data store, or for displaying text data to be output from a data store. By positioning the cursor at the symbol using the mouse, and by appropriate operation of the mouse control buttons, the user can initiate re-sizing of the data field associated with the symbol. Preferably the data entry field is re-sized in accordance with the re-positioning of the cursor whilst the re-size control input is activated. Thus the new size of the data entry field is directly related to the position the user has moved the cursor to whilst activating the re-size control input, providing a natural and easily understood interface for the user.

In a preferred embodiment, the system further includes means for displaying the cursor as a resize icon image on said document representation in response to the cursor being positioned at said symbol and to said re−sizing control input. Thus the appearance of the cursor can be changed to convey information to the user, such as that re−sizing is in progress. Another advantageous way of conveying information to the user is for the system to further include means responsive to the position of said cursor for providing in said documentation representation an indication of the change in size of said data field during re−sizing. In a preferred embodiment the means for providing an indication of the change in size of the data field comprises means for displaying a re−sizing rectangle representing the changed size of said data field, wherein the data entry field is changed to substantially the size represented by said re−sizing rectangle upon deactivation of the re−sizing control input. Thus the user has a continuous visual measure of the size that the data field would be at any point in the re−sizing operation.

Preferably, the data processing system further includes means for storing a text string located in said data field during said changing. It is further preferred that where the document representation includes plural display elements, the data processing system further includes means for repositioning said display elements in said document representation to locations which prevent overlap with said data field during said changing. Both of these features are clearly desirable in order to maintain the ordered appearance of the form both during and after re−sizing.

The invention also provides a method of controlling input/output from a data processing system including a video display terminal, mouse means for positioning a cursor on the video display terminal and providing control inputs to said system, and graphical user interface means for representing a document on the video display terminal, said document having at least one data field for text entry or display,

the method comprising the steps of:

generating a symbol on said document representation associated with a data field therein;

changing the size of a data field in response to the cursor being positioned at the associated symbol and to a re−sizing control input from said mouse means.

An embodiment of the invention will now be described by way of example with reference to the following drawings:

Figure 1 is a block diagrammatic illustration of a data processing system including components for the provision of a graphic user interface in accordance with the present invention;

Figure 2 illustrates a menu−driven graphical user interface display generated including a structured form document with data entry fields and associated data descriptors, wherein one of the data entry fields is re−sizable in response to a user control input;

Figure 3 is a detailed block diagram illustrating additional aspects of the system shown in Figure 1;

Figure 4 illustrates the graphical user interface display of Figure 2 with a resizing rectangle image generated during a resizing of a selected data entry field; and

Figure 5 is a flow diagram illustrating a process of resizing a selected data entry field in the graphical user interface display of Figure 2.

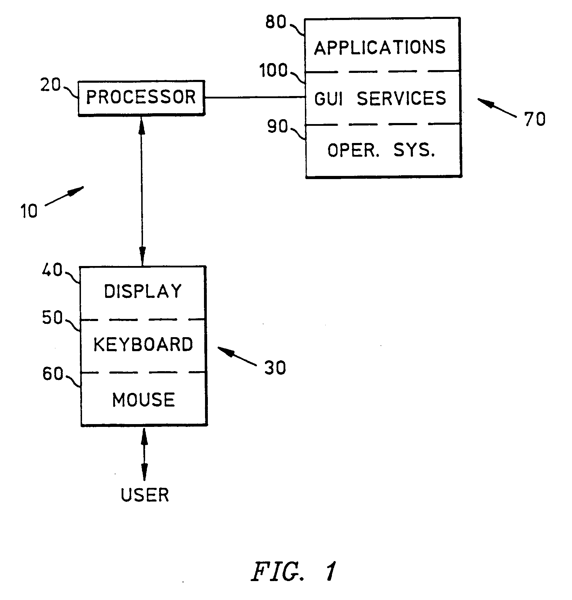

It will be understood that the provision of an adaptive control interface in a digital processing system may be embodied in a variety of system contexts. One such system is illustrated by way of example in Figure 1, wherein a data processing system designated generally as 10 includes a data processing unit 20 of conventional design. An input/output system 30 is arranged in communication with the processing unit 20 and includes a video display terminal 40 with a resolution of at least 1024 x 760 Pixels, a conventional keyboard 50, and a mouse or other cursor control device 60 with at least one input button or switch. The data processing system 10 further includes a data storage resource 70, which may include a conventional disk drive device or other storage system. The data storage resource 70 is provided with plural data storage areas incorporating an applications program module 80, an operating system 90 and a GUI (graphical user interface) data control structure 100.

The data processing unit 20 may be selected from any of a number of conventional processor devices, including, but not limited to, processors commonly found in that class of data processing apparatus known as "personal" computers or PCs. The data processing unit 20 operates in conjunction with the operating system 90 to control system hardware operations and program execution. The operating system 90 is of conventional design and may include such well−known products as the DOS or OS/2 operating systems. These operating systems are products of Microsoft Corporation and International Business Machines Corporation.

It is contemplated that any number of commercially available applications programs may be placed in the applications program module 80, including database control programs and other software. Particular advantage may be derived when the system 10 is programmed to operate as a workstation data input device, wherein customer or other data is input using a form display. In that case, the system 10 may be used in lieu of printed forms and manual data entry.

Control of the input/output system 30 is provided by the GUI data control structure 100, which directs operations of the data processing unit 20 in response to user – initiated control signalling from the input/output system 30. The GUI data control structure 100 provides graphical user interface control information to the processor 20 for directing the operation of the video display terminal 40, the keyboard 50 and the mouse 60 to enable a system user to input command instructions and data to the data processing system 10.

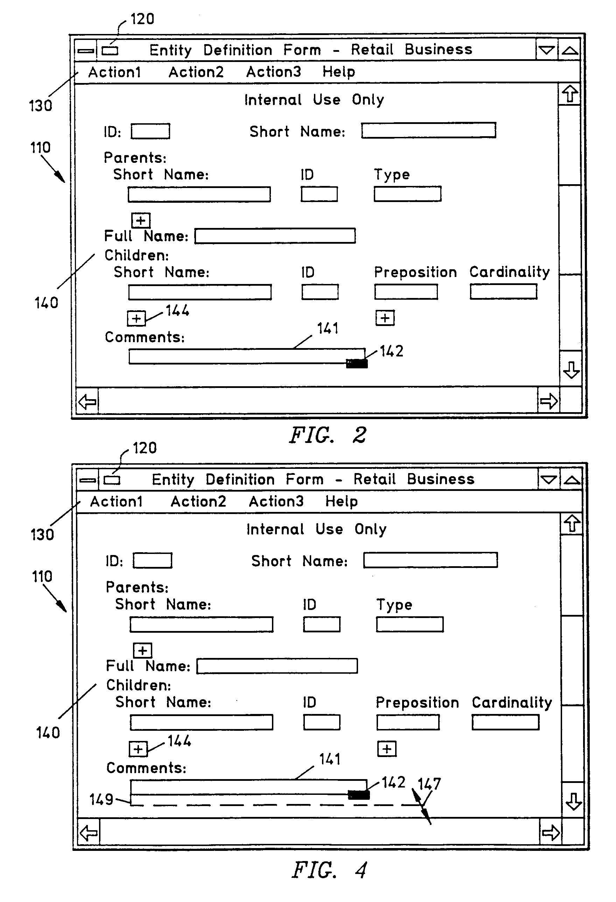

Referring now to Figure 2, a document form display or window 110 generated by the GUI data control structure 100 is shown. The document display 110 is generated in the video display terminal 40 via control information provided by the GUI data control structure 100. The display 110 includes a title block 120 at the top of the display containing information about the application then being executed from the applications program module 30. Below the title block 120 is a command menu bar 130 including plural command menu items for inputing selected control information to the system. As is conventional, the menu bar includes one or more "Action" categories. To access a category, the user performs a conventional "point – and – click" operation using the mouse 60. That is, the user controls the mouse to position a mouse pointer over the desired category, and thereafter operates a button on the mouse to register the selection. When an "Action" category is choosen, a "pull – down" menu appears containing one or more commands relating to the category. These may be selectively activated using the point – and – click procedure.

The display of Figure 2 further includes a data entry block 140. The entry block 140 has disposed therein a series of data entry fields with associated data descriptors providing various information about an individual. Each data entry field is represented by a rectangle and, preferably, is shaded differently than the display background. In addition, a data entry field 141 is provided in conjunction with the descriptor entitled "Comments." This entry field may be used to add additional data concerning a subject as required by the application. It includes an icon in the form of a small darkened rectangle 142 at the lower right hand corner. This will be referred to as a "grab point", and its function is described below. The display of Figure 2 further includes a plurality of pushbuttons 144 disposed in the data entry block 140. The pushbuttons are represented by small rectangles with plus (+) signs therein. The functions of the pushbuttons are not relevant to the present invention and will not be considered further herein.

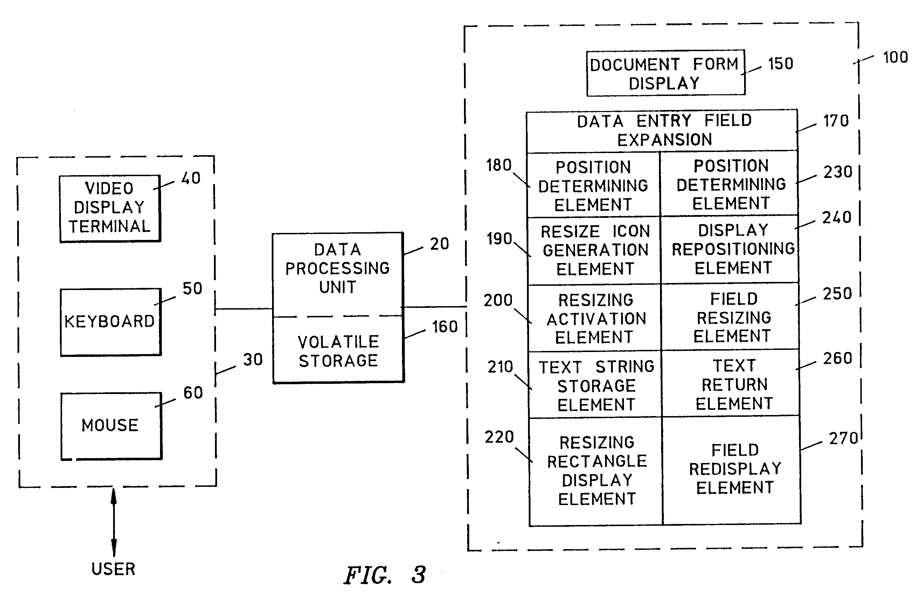

Referring now to Figure 3, the GUI data control structure 100 includes a document form display module 150. The display module 150 provides control information to the data processing unit 20 for generating a series of data objects representing components of the display of Figure 2. This information is represented in pseudocode form in Appendix A hereto. The display code of Appendix A, which is preferably implemented using an object oriented programming language such as Smalltalk or C + +, defines ordered collections or arrays which are used to store the position, size (dimension), type, and contents of data entry fields, push buttons and labels. When the form window of Figure 2 is generated, this data may be placed in a volatile storage device 160 associated with the processor 120, and used to refresh the display 110.

As shown in Appendix A, ordered collections are created for each of the labels, data entry fields and pushbuttons, as well as the Comments entry field 141. The labels are positioned by the column and row location of the lower left hand corner of the text string. The label text string contents are also specified. The entry fields and pushbuttons are positioned by the column and row location of the lower left hand corner and upper right hand corner of the rectangular box representing the entity. In addition, in the case of entry fields, single quotation marks ' ' are used to define a place holder for text entry, and letters A – D are used in all but the comments field to define field attributes. The pushbutton arrays are defined to include a plus ' + ' sign image. As further shown in Appendix A, the comments array further defines a grabpoint rectangle image at the lower right hand corner of the comments data field.

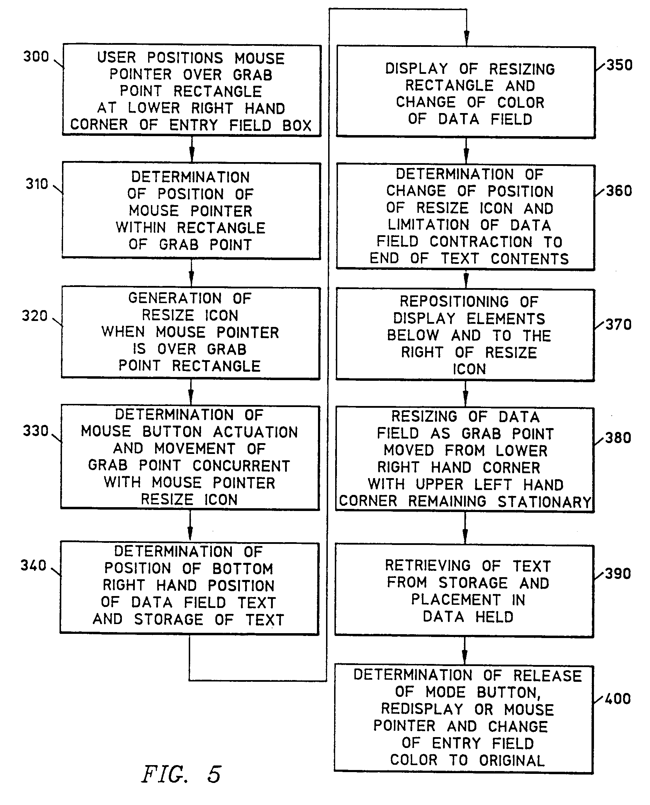

The grabpoint rectangle image is essentially a stationary icon represented, for example, by a bit map whose location is given by the syntax of the Smalltalk command labeled "Comment add" in Appendix A. Thus, when the processor system obtains the control information for displaying the Comments data field 141, the information includes the grabpoint icon, causing the display of the small rectangle 142 in the lower right hand corner of the field. The graphics package underlying the display illustrated in Figures 2 and 4 has information respecting the display location of every display feature, including the Comments field and the grabpoint icon.

The GUI data control structure 100 further includes a data field expansion module 170. The expansion module 170 includes plural process control elements. These control elements provide control information to the processor 20 to permit the re – sizing of a selected data entry field in the document display of Figure 4. The control elements of the module 170 control the system 10 in accordance with the procedure shown in pseudocode form in Appendix B. The process by which a data entry field is caused to expand is further

4

shown in the flow diagram of Figure 5.

Thus, with reference now to Figures 3, 4, and 5, together with the pseudocode listing of Appendix B, the data entry field 141 bearing the data descriptor "Comments," is dynamically expandable in order to provide for the input of extended text data into a data store. To expand the data entry field 141, the user operates the mouse 60 to position a mouse pointer over the grabpoint rectangle 142 provided at the lower right hand corner of the data entry field. This action is illustrated at step 300 of the flow diagram of Figure 5. In the data entry field expansion module 170, a position determining element 180 controls the processor 20 to continuously sample an input from the mouse 60 to determine whether the mouse pointer is within the rectangle position of the grab point icon. The control information provided by the position determining element 180 is shown in pseudocode form at line 10 of Appendix B, and is represented by process step 310 in Figure 5. When the mouse pointer is over the grabpoint icon, a resize icon generation element 190 controls the processor 20 to change the mouse pointer to a re – size icon 147. The re – size icon 147 is shown in Figure 3 as a double – headed arrow image; advantageously, it provides a visual indication of the two x – y directions in which data field expansion/contraction is allowed to occur. The control information provided by the icon generation element 190 is shown in pseudocode form at line 500 of Appendix B, and is represented by process step 320 in Figure 5.

Using the re – size icon 147 and grabpoint icon 142 to re – size the Comment field may be implemented by available means. For example, the AD/Cycle user interface available from the assignee of this application affords the ability to re – size a symbol in a display representation of a network by the use of "size handles". See IBM Document Number ADUIB – 2.0, September 1, 1991.

With the re – size icon 147 displayed, the re – sizing operation of the invention is commenced by pressing a designated button on the mouse 60. This activates a re – sizing control input effectively equivalent to a re – sizing command. For as long as the mouse button is pressed, a resizing activation element 200 controls the processor 20 to conduct a resizing procedure. This procedure permits the user to expand or contract the size of a data field by movement of the re – size icon 147. The control information provided to the processor 20 by the resizing activation element 200 is shown in pseudocode form at line 510 of Appendix B, and is represented by process step 330 in Figure 5. As the resizing procedure executes, a text string storage element 210 controls the processor 20 to check for characters in the entry field, locate the bottom and right hand end positions of the text, and place the text in a temporary storage area, such as the storage area 160. The control information provided by the text string storage element 210 is shown in pseudocode form at line 1000 of Appendix B, and is represented by process step 340 in Figure 5.

Following the storage of text information from the data field, a resizing rectangle display element 220 controls the processor 20 to display the data entry field in a modified color and to generate a resizing rectangle display 149. The resizing rectangle 149 is shown in Figure 4 as a dashed line entity whose upper left hand corner corresponds to that of the data entry field, but whose lower right hand corner corresponds to the position of the resize icon 147. The position of the resize icon 147 thus determines the size of the resizing rectangle 149. The size of the resizing rectangle 149 indicates to the user the change in size of the data entry field which is being expanded or contracted. The control information provided by the resizing rectangle display element 220 is shown in pseudocode form at lines 1010 – 1030 of Appendix B, and is represented by process step 350 in Figure 5.

As the resize icon 147 is moved, a position determining element 230 controls the processor 20 to determine the incremental change in position relative to the position of the mouse pointer prior to resizing. Moreover, the element 230 controls the processor to limit any horizontal or vertical contraction of the entry field to the determined end of the data field text contents. The control information provided by the position determining element 230 is shown in pseudocode form at lines 1040 – 1045 of Appendix B, and is represented by process step 360 in Figure 5. Based on the determined position of the resize icon 147, a display repositioning element 240 provides control information to the processor 20 to reposition any labels, data entry fields and pushbuttons located below the Comments field. The control information provided by the repositioning element 240 is shown in pseudocode form at lines 1050 – 1070 of Appendix B, and is represented by process step 370 in Figure 5.

As the resize icon 147 is moved, a field resizing element 250 controls the processor 20 to expand or contract the Comments field from the bottom right hand corner, with the upper left hand corner maintaining its original position. The control information provided by the repositioning element 250 is shown in pseudocode form at line 1080 of Appendix B, as is represented by process step 380 in Figure 5.

When the mouse button is released, the re – sizing control input is deactivated and the data field resizing procedure is terminated. A text return element 260 controls the processor 20 to fetch the text data previously stored and return it to the data entry field. The control information provided by the text return element 260 is shown in pseudocode form at line 1090 of Appendix B, and is represented by process step 390 in Figure 5. In a final resizing step, a field redisplay element 270 controls the processor 20 to change the resize icon back to a mouse pointer icon, to return the entry field to its original color and to redisplay the field in its changed size. The control information provided by the redisplay element 270 is shown in pseudocode form at lines 1095 − 2000 of Appendix B, and is represented by process step 400 in Figure 5.

In accordance with the apparatus and method above, the user is provided with a form which maintains its initial structure, but which is dynamically expandable to provide a resized entry field. Advantageously, the system allows direct manipulation by a mouse using a resizing rectangle that serves both as a visual indicator that a data entry field can be resized and as a control to resize the entry field.

It will be understood that modifications and adaptations of the described system will naturally occur to persons skilled in the art. For example, the control system provided by the GUI data control structure could be located within the applications module 80, although it is generally desirable that this system be located to provide input/ouput and graphical user interface services for all applications. The graphical user interface control described may also be readily adapted to permit data field resizing in a data output mode as well as a data input mode − for example, the display of Figure 4 may be used to present data from a data store. Data in the Comments field would be displayed to the extent permitted by the nominal size of the field and additional data would be displayed by expanding the field.

APPENDIX A

```
Label:= OrderedCollection new.          /Create an ordered
                                        /collection for labels

EnField:= OrderedCollection new.        /Create an ordered col-
                                        /lection for entry fields

Button:= OrderedCollection new.         /Create an ordered col-
                                        /lection for buttons

Comment= OrderedCollection new.         /Create an ordered col-
                                        /lection for comment
                                        /field


Label add:  (OrderedCollection with: 'Internal Use Only'
               with: (200@380)).
Label add:  (OrderedCollection with: 'ID :' with:(60@300)).
Label add:  (OrderedCollection with: 'Short Name:' with:
               (220@300)).
Label add:  (OrderedCollection with: 'Parents:' with:
               (60@270)).
Label add:  (OrderedCollection with: 'Short Name' with:
               (100@245)).
Label add:  (OrderedCollection with: 'ID' with: (270@245)).
Label add:  (Ordered Collection with: 'Type' with:
               (360@245)).
Label add:  (OrderedCollection with: 'Full Name:' with:
               (60@140)).
Label add:  (OrderedCollection with: 'Children:' with:
               (60@100)).
Label add:  (OrderedCollection with: 'Short Name' with:
               (90@80)).
Label add:  (OrderedCollection with: 'ID' with: (270@80)).
Label add:  (OrderedCollection with: 'Preposition' with:
               (340@80)).
Label add:  (OrderedCollection with: 'Cardinality' with:
```

```
                         (460@80)).
            Label add:   (OrderedCollection with: 'Comments:' with:
                         (60@80)).


            EnField add: (OrderedCollection with: 90@296 with:
                         (124@320)with:' 'with:'A').
            EnField add: (OrderedCollection with: 320@296 with:
                         (470@320)with:' 'with:'A').
            EnField add: (OrderedCollection with: 80@216 with:
                         (230@240)with:' 'with:'B').
            EnField add: (OrderedCollection with: 260@216 with:
                         (290@240)with:' 'with:'B').
            EnField add: (OrderedCollectino with: 340@216 with:
                         (420@240)with:' 'with:'B').
            EnField add: (OrderedCollection with: 140@131 with:
                         (290@155)with:' 'with:'A').
            EnField add: (OrderedCollection with: 80@46 with:
                         (230@70)with:' 'with:'C').
            EnField add: (OrderedCollection with: 260@46 with:
                         (290@70)with: ' 'with:'C').
            EnField add: (OrderedCollection with: 340@46 with:
                         (440@70)with:' 'with:'D').
            EnField add: (OrderedCollection with: 460@46 with:
                         (540@70)with:' 'with:'D').


            Button add:  (OrderedCollection with: 89@180 with:
                         (100@200)with: '+').
            Button add:  (OrderedCollection with: 80@10 with:
                         (100@30)with: '+').
            Button add:  (OrderedCollection with: 340@20 with:
                         (360@40)with: '+').


            Comment add: (OrderedCollection with: 80@20 with:
                         (300@60)with: ' ' with: grabpoint image).
```

APPENDIX B

```
10    IF mouseLocation = grabPoint THEN GOSUB 500


500   IF mousePointer not resizeIcon then
         SET mousePointer = resizeIcon         /Display re-size
                                               /icon at grap piont
510   IF button1 = Down then GOSUB             /if button 1 down
         1000 ELSE 10                          /re-size entry field


1000 PUT textstring AT: textBuffer            /Store entry field
                                               /text
1010 WHILE button1 = Down                      /Display re-sizing
                                               /rectangle
1020 DISPLAY Rectangle with
         origin:(NWcorner) corner:(mouseLocation)
1030 WEND
1040 INC = oldCorner - mouseLocation          /Compute position
                                               /change
1050 LABEL DO:[:ITEM|((ITEM at:2)Y) <
         (mouseLocation)                       /Move labels,
         IF TRUE:[ITEM at:2 PUT ((ITEM         /fields, and buttons
         AT:2)-(O@INC))]]                      /below re-sized
1060 EntryField DO:[:ITEM|((ITEM              /entry field
         at:2)Y) < (mouseLocation)
         IF TRUE:[ITEM at:2 PUT ((ITEM AT:2)
         -(O@INC))]]
1070 Button DO:[:ITEM|((ITEM at:2)Y)
         < (mouseLocation)
         IF TRUE:[ITEM at:2 PUT ((ITEM AT:2)
         -(O@INC))]]
1080 Resize EntryFieldWin with                /Re-size entry field
         origin:(NWCORNER) corner:
         (mouseLocation)
```

9

```
1090 PUT textString at:EntryFieldWin       /Put text string
                                            /back in entry field

2000 DISPLAY EntryFieldWin                  /Re-display entry
                                            /field
```

## Claims

1. A data processing system including a video display terminal (40), mouse means (60) for positioning a cursor on the video display terminal and providing control inputs to said system, and graphical user interface means (100) for representing a document on the video display terminal, said document having at least one data field for text entry or display,

   the data processing system being characterised by:

   means for generating a symbol (142) on said document representation associated with a data field (141) therein;

   re-sizing means (170) responsive to the cursor (147) being positioned at said symbol and to a re-sizing control input from said mouse means for changing the size of the associated data field.

2. The data processing system of claim 1, further including means (190) for displaying the cursor as a resize icon image on said document representation in response to the cursor being positioned at said symbol and to said re-sizing control input.

3. The data processing system of any preceding claim, further including means (210) for storing a text string located in said data field during said changing.

4. The data processing system of any preceding claim, further including means (220) responsive to the position of said cursor for providing in said documentation representation an indication of the change in size of said data field during re-sizing.

5. The data processing system of claim 4, wherein the means for providing an indication of the change in size of the data field comprises means (220) for displaying a re-sizing rectangle representing the changed size of said data field, wherein the data entry field is changed to substantially the size represented by said re-sizing rectangle upon deactivation of the re-sizing control input.

6. The data processing system of any preceding claim, wherein said document representation includes plural display elements, and wherein said data processing system further includes means (240) for repositioning said display elements in said document representation to locations which prevent overlap with said data field during said changing.

7. The data processing system of any preceding claim, wherein the data entry field is re-sized in accordance with the re-positioning of the cursor whilst the re-size control input is activated.

8. The data processing system of any preceding claim, wherein said symbol on the document representation is a rectangle in one corner of the data entry field associated therewith.

9. A method of controlling input/output from a data processing system including a video display terminal (40), mouse means (60) for positioning a cursor on the video display terminal and providing control inputs to said system, and graphical user interface means (100) for representing a document on the video display terminal, said document having at least one data field (141) for text entry or display,

   the method comprising the steps of:

   generating a symbol (142) on said document representation associated with a data field therein;

   changing the size of a data field in response to the cursor being positioned at the associated symbol and to a re-sizing control input from said mouse means.

*FIG. 1*

EP 0 541 237 A1

FIG. 2

FIG. 4

12

EP 0 541 237 A1

VIDEO DISPLAY TERMINAL — 40

KEYBOARD — 50

MOUSE — 60

— 30

USER

DATA PROCESSING UNIT — 20

VOLATILE STORAGE — 160

DOCUMENT FORM DISPLAY — 150

— 100

| DATA ENTRY FIELD EXPANSION — 170 | |
|---|---|
| POSITION DETERMINING ELEMENT — 180 | POSITION DETERMINING ELEMENT — 230 |
| RESIZE ICON GENERATION ELEMENT — 190 | DISPLAY REPOSITIONING ELEMENT — 240 |
| RESIZING ACTIVATION ELEMENT — 200 | FIELD RESIZING ELEMENT — 250 |
| TEXT STRING STORAGE ELEMENT — 210 | TEXT RETURN ELEMENT — 260 |
| RESIZING RECTANGLE DISPLAY ELEMENT — 220 | FIELD REDISPLAY ELEMENT — 270 |

*FIG. 3*

300 — USER POSITIONS MOUSE POINTER OVER GRAB POINT RECTANGLE AT LOWER RIGHT HAND CORNER OF ENTRY FIELD BOX

310 — DETERMINATION OF POSITION OF MOUSE POINTER WITHIN RECTANGLE OF GRAB POINT

320 — GENERATION OF RESIZE ICON WHEN MOUSE POINTER IS OVER GRAB POINT RECTANGLE

330 — DETERMINATION OF MOUSE BUTTON ACTUATION AND MOVEMENT OF GRAB POINT CONCURRENT WITH MOUSE POINTER RESIZE ICON

340 — DETERMINATION OF POSITION OF BOTTOM RIGHT HAND POSITION OF DATA FIELD TEXT AND STORAGE OF TEXT

350 — DISPLAY OF RESIZING RECTANGLE AND CHANGE OF COLOR OF DATA FIELD

360 — DETERMINATION OF CHANGE OF POSITION OF RESIZE ICON AND LIMITATION OF DATA FIELD CONTRACTION TO END OF TEXT CONTENTS

370 — REPOSITIONING OF DISPLAY ELEMENTS BELOW AND TO THE RIGHT OF RESIZE ICON

380 — RESIZING OF DATA FIELD AS GRAB POINT MOVED FROM LOWER RIGHT HAND CORNER WITH UPPER LEFT HAND CORNER REMAINING STATIONARY

390 — RETRIEVING OF TEXT FROM STORAGE AND PLACEMENT IN DATA HELD

400 — DETERMINATION OF RELEASE OF MODE BUTTON, REDISPLAY OR MOUSE POINTER AND CHANGE OF ENTRY FIELD COLOR TO ORIGINAL

*FIG. 5*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GOODMAN D. 'The Complete HyperCard Handbook' 1988 , BANTAM BOOKS , NEW YORK,US * page 151, line 23 - page 152, line 30 * | 1-5,7,9 | G06F3/033 G06F15/20 |
| Y | OSBORN 'McWrite and McPaint' 1984 , MCGRAW-HILL , BERKELEY * page 5 - page 10 * | 1-5,7,9 | |
| Y | EP-A-0 451 485 (INTERNATIONAL BUSINESS MACHINES CORPORATION) * column 12, line 24 - line 53; claims 1-8,14 * | 2 | |
| A | | 1,4,5,7,9 | |
| A | EP-A-0 376 420 (SOFTVIEW, INC) * column 3, paragraph 15 - column 4, paragraph 14 * * column 14, line 2 - line 33 * | 1,6,9 | |

TECHNICAL FIELDS SEARCHED (Int. Cl.5)

G06F

The present search report has been drawn up for all claims

| Place of search | Date of completion of the search | Examiner |
|---|---|---|
| THE HAGUE | 10 FEBRUARY 1993 | BAILAS A. |

EPO FORM 1503 03.82 (P0401)